# EUROPÄISCHE PATENTSCHRIFT

(11) **EP 2 146 874 B1**
(45) Veröffentlichungstag und Bekanntmachung des Hinweises auf die Patenterteilung: **25.07.2012**
(21) Anmeldenummer: 08749629.5
(22) Anmeldetag: 21.04.2008
(51) Int. Cl.: B60R 21/239

(54) **GASSACKANORDNUNG FÜR EIN FAHRZEUGINSASSEN-RÜCKHALTESYSTEM UND VERFAHREN ZUM HERSTELLEN EINES GASSACKMODULS**
AIRBAG ARRANGEMENT FOR A VEHICLE OCCUPANT RESTRAINT SYSTEM AND METHOD FOR THE PRODUCTION OF AN AIRBAG MODULE
DISPOSITIF DE SAC À GAZ POUR SYSTÈME DE RETENUE D'OCCUPANTS D'UN VÉHICULE, ET PROCÉDÉ DE PRODUCTION D'UN MODULE DE SAC À GAZ

(30) Priorität: 19.04.2007 DE 202007006023 U
(43) Veröffentlichungstag der Anmeldung: 27.01.2010
(73) Patentinhaber: Takata AG, 63743 Aschaffenburg (DE)
(72) Erfinder: FELLER, Jens, 89171 Illerkirchberg (DE)
(74) Vertreter: Staroske, Sandro
(86) Internationale Anmeldenummer: PCT/EP2008/054799
(87) Internationale Veröffentlichungsnummer: WO 2008/129031

(56) Entgegenhaltungen:
- EP-A- 0 810 126
- EP-A- 1 361 120
- EP-A- 1 686 016
- DE-A1- 4 306 615
- DE-B3-102004 014 681
- FR-A- 2 724 144
- GB-A- 2 421 932

## Beschreibung

Die Erfindung betrifft eine Gassackanordnung für ein Fahrzeuginsassen-Rückhaltesystem und ein Verfahren zum Herstellen eines Gassackmoduls.

Es ist bekannt, in einem Gassack eines Fahrzeuginsassen-Rückhaltesystems eine Ausströmöffnung oder mehrere Ausströmöffnungen vorzusehen, um Gas aus dem teilweise oder vollständig aufgeblasenen Gassack kontrolliert abzuleiten. Das kontrollierte Ableiten von Gas hat den Zweck, den Gassack adaptiv, z. B. in Abhängigkeit von Körperkenngrößen (Gewicht, Größe) eines Fahrzeuginsassen, zu befüllen. Ein Gassack mit einer Ausströmöffnung zur adaptiven Befüllung ist z. B. in der EP 0 670 247 A1 beschrieben.

Aus der gattungsbildenden EP 0 810 126 A1 ist ein Gassack für ein Fahrzeuginsassen-Rückhaltesystem mit mindestens einer im Querschnitt veränderbaren Ausströmöffnung bekannt. Die Ausströmöffnung wird durch eine Überdeckung von Öffnungen in mehreren, im aufgeblasenen Zustand des Gassacks übereinanderliegenden Gewebeschichten gebildet, wobei sich die Gewebeschichten mit den Öffnungen abhängig vom Gassackinnendruck relativ zueinander verschieben und damit den Querschnitt der Abströmöffnung ändern.

In der FR 2 724 144 A1 wird ein Verfahren zum Herstellen eines Gassackmoduls beschrieben, bei dem ein Gasgenerator durch eine in einem Gassackmaterial angeordnete erste Öffnung und durch eine in einer Verstärkungslage angeordnete zweite Öffnung hindurchgeführt wird.

Das von der vorliegenden Erfindung zu lösende Problem besteht darin, eine Gassackanordnung mit einem Gassack zu schaffen, der einen auf einfache Weise herstellbaren Zugang zu einer Kammer des Gassacks aufweist.

Dieses Problem wird durch die Gassackanordnung mit den Merkmalen gemäß Anspruch 1 gelöst.

Des Weiteren liegt der Erfindung das Problem zugrunde, ein Verfahren anzugeben, mit dem sich auf einfache Weise ein Gassackmodul mit Gasgenerator herstellen lässt. Dieses Problem wird durch das Verfahren gemäß Anspruch 14 gelöst. Weiterbildungen der Erfindung sind in den abhängigen Ansprüchen angegeben.

Danach ist eine Gassackanordnung für ein Fahrzeuginsassen-Rückhaltesystem vorgesehen, mit:
- einem Gassack, der mindestens eine aufblasbare Kammer und mindestens eine erste Öffnung aufweist; und
- einer Abdeckung, die die erste Öffnung des Gassacks zumindest teilweise überdeckt und die mindestens eine zweite Öffnung aufweist, wobei
- die erste und die zweite Öffnung so ausgebildet und angeordnet sind, dass die Kammer des Gassacks durch die erste und die zweite Öffnung hindurch zugänglich ist, wobei
- die erste Öffnung in einer ersten Lage eines Gassackmaterials und die zweite Öffnung in einer zweiten Lage eines Gassackmaterials ausgebildet ist.

Erfindungsgemäß sind dabei die erste und die zweite Lage durch ein in den Gassack durch die erste und die zweite Öffnung hineinragendes Bauteil im Bereich der Öffnungen so gegeneinander verspannt, dass ein Abschnitt des Randes der ersten und ein Abschnitt des Randes der zweiten Öffnung dicht an dem Bauteil anliegen.

Insbesondere sind die erste und die zweite Öffnung so ausgebildet, dass Gas durch die erste und zweite Öffnung hindurch aus der Kammer des Gassacks ausströmen kann, also auch die Umgebung der Kammer von der Kammer aus zugänglich ist. Die erste und die zweite Öffnung bilden somit eine Ausströmöffnung, aus der Gas aus der teilweise oder vollständig aufgeblasenen Kammer des Gassacks abströmen kann. Es können selbstverständlich mehrere erste Öffnungen und mehrere zweite Öffnungen vorhanden sein, die jeweils auch unterschiedlich ausgeführt sein können, d.h. unterschiedliche Geometrien aufweisen können.

Die Kammer des Gassacks ist beispielsweise durch ein Gassackmaterial (z.B. ein textiles Gewebe) begrenzt, wobei die erste Öffnung in dem Gassackmaterial ausgebildet ist. Es ist unerheblich, auf welcher Seite des Gassacks, d.h. des Gassackmaterials, die Abdeckung angeordnet ist. Die Abdeckung kann ebenfalls aus einem Gassackmaterial gebildet sein und sowohl innen als auch außen angeordnet sein, d. h. an einer der aufblasbaren Kammer abgewandten Seite des Gassackmaterials oder an einer der aufblasbaren Kammer zugewandten Seite des Gassackmaterials.

Des Weiteren können die erste und die zweite Öffnung so angeordnet sein, dass die Kammer des Gassacks von außerhalb des Gassacks zugänglich ist. Die erste Öffnung ist z. B. in einem Bereich des Gassackmaterials ausgebildet, der die Kammer des Gassacks nach außen begrenzt, d. h. von der Umgebung trennt.

In einer anderen Weiterbildung der Erfindung sind die erste und die zweite Öffnung so ausgebildet und angeordnet, dass die Kammer des Gassacks von einer weiteren Kammer des Gassacks aus zugänglich ist. Hier ist die erste Öffnung in einem Abschnitt des Gassacks (des die Kammer begrenzenden Gassackmaterials) angeordnet, das zwei Kammern des Gassacks voneinander trennt.

Darüber hinaus können die erste und/oder die zweite Öffnung in einem dehnbaren Material ausgebildet sein, so dass die Größe der ersten und/oder der zweiten Öffnung vom Innendruck des Gassacks abhängt, d.h. die beiden Öffnungen zusammen eine Abströmöffnung bilden, deren effektiver Abströmdurchmesser vom Innendruck im Gassack abhängt. Insbesondere kann das Gassackmaterial, das die Kammer des Gassack begrenzt und in dem die erste Öffnung ausgebildet ist, aus einem derartigen, dehnbaren Material gebildet sein. Zudem kann die Abdeckung ein dehnbares Material aufweisen oder aus einem dehnbaren Material beschaffen sein und die zweite Öffnung in diesem dehnbaren Material ausgebildet ist. Das dehnbare Material kann z. B. eine Gewebelage sein oder ein Verbund mehrerer Gewebelagen.

Die Druckabhängigkeit der ersten bzw. der zweiten Öffnung kann z. B. durch die Geometrie und Anzahl der ersten und zweiten Öffnungen, der Art der Verbindung der Abdeckung mit dem Gassack oder durch die Ausrichtung der (z.B. schlitzförmigen) Öffnung in Bezug auf eine Gewebeausrichtung, wenn das Gassackmaterial und/oder die Abdeckung aus einem Gewebe gebildet ist, abgestimmt werden. Beispielsweise sind die Öffnungen derart ausgebildet, dass während der Entfaltung und im Arbeitsbereich des Gassacks nahezu kein Gas über die erste und die zweite Öffnung nach außen abströmen kann und erst, wenn der Innendruck im Gassack einen bestimmten Wert erreicht, die Größe der Öffnungen ein Abströmen von Gas aus dem Gassackinneren (aus der Kammer des Gassacks) erlaubt. Dieser Wert kann z.B. von der Festigkeit des Gassacks oder das gewünschte Schutzpotential (abhängig z.B. vom Gewicht eines Fahrzeuginsassen) abhängen.

In einer weiteren Variante der Erfindung sind die erste und/oder die zweite Öffnung längserstreckt, insbesondere schlitzförmig, ausgebildet. Der Verlauf der Schlitze ist hierbei beliebig, z. B. können die Schlitze gerade oder auch gekrümmt verlaufen. Insbesondere kreuzen sich eine schlitzartig ausgebildete erste Öffnung und eine schlitzartig ausgebildete zweite Öffnung, z.B. unter einem rechten Winkel. In Fall sich überkreuzender Öffnungen entsteht ein Überlappungsbereich der ersten mit der zweiten Öffnung, wobei der Überlappungsbereich eine Zugangsöffnung zu der Kammer des Gassacks darstellt.

Die Abdeckung, die die erste Öffnung des Gassackmaterials überdeckt, kann mit dem Gassack verbunden sein, z. B. durch Annähen oder Ankleben. Zudem kann die erste Öffnung in einem separat zum Gassack gefertigten Teil ausgebildet sein, wobei das separat gefertigte Teil im fertigen Gassack mit dem Gassack verbunden ist.

In einem weiteren Beispiel wird der Zugang zu der Kammer des Gassacks vorgefertigt. Hierzu wird eine separat zum Gassack gefertigte Abdeckung mit der zweiten Öffnung zunächst mit einem ebenfalls separat gefertigten Teil, in dem die erste Öffnung ausgebildet ist, verbunden (z.B. angenäht), bevor die Kombination aus dem separatem Teil mit der ersten Öffnung und der Abdeckung mit der zweiten Öffnung an dem Gassack angebracht wird. In diesem Beispiel weist der Gassack z. B. einen zusätzlichen Öffnungsbereich zur Kammer hin auf, über dem die vorgefertigte Kombination aus dem separatem Teil und der Abdeckung angebracht wird.

Ein Bauteil kann z. B. von außerhalb des Gassacks in die Kammer des Gassacks oder in einen sonstigen, mit der Kammer in Verbindung stehenden inneren Bereich des Gassacks hineinragen. Zudem kann die erste und die zweite Öffnung auch an einem Gassackmaterial angeordnet sein, das zwei Kammern des Gassacks voneinander trennt und das Bauteil durch die erste und die zweite Öffnung hindurch von einer Kammer in eine andere Kammer hineinragen.

Beispiele für ein Bauteil, die durch die erste und die zweite Öffnung hindurch in den Gassack hineinragen, sind ein Gasgenerator, der zumindest abschnittsweise in den Gassack hineinragt, oder ein Befestigungselement zum Befestigen des Gassacks an einer Fahrzeugstruktur. Insbesondere kann die Kammer des Gassacks durch ein erstes Gassackmaterial (Gewebelage) und die Abdeckung durch ein zweites Gassackmaterial gebildet sein.

Des Weiteren kann das Bauteil eine elektrische Leitung sein, die mit einem im Gassack (beispielsweise in der Kammer des Gassacks) befindlichen Bauteil, insbesondere einem Gasgenerator, verbunden ist.

In einer anderen Variante der Erfindung grenzt die erste und/oder die zweite Öffnung eine Lasche an, die so biegbar ist, dass die erste bzw. die zweite Öffnung durch Biegen der Lasche zumindest teilweise freigegeben werden kann. Zudem kann die Lasche so mit dem Rand der Öffnung verbunden sein, dass sich der Querschnitt der Öffnung durch Ziehen an der Lasche verändern lässt, um das Einführen eines Bauteils durch die Öffnung zu erleichtern.

Die hervorgerufene Verspannung der ersten und der zweiten Gewebelage kann z.B. durch eine Umnähung, die das zweite Gassackmaterial im Bereich der Durchgangsöffnung mit dem ersten Gassackmaterial verbindet, beeinflusst werden. Des Weiteren lässt sich das Ausmaß der Verspannung alternativ oder zusätzlich über die Geometrie der ersten und der zweiten Öffnung bzw. deren Lage zueinander beeinflussen.

Darüber hinaus kann die Lasche eine Befestigungsstruktur aufweisen, über die der Gasgenerator an der Lasche befestigt ist. Zusätzlich können weitere Laschen vorgesehen sein, die z.B. außen an dem Gassack befestigt sind und z.B. als Schutz für den Gasgenerator dienen.

Des Weiteren betrifft die Erfindung ein Verfahren zum Herstellen eines Gassackmoduls unter Verwendung einer wie oben beschriebenen Gassackanordnung, wobei die Abdeckung innen an einem Gassackmaterial, das die Kammer des Gassacks begrenzt, angeordnet ist. Das Verfahren weist die Schritte auf:
- Hindurchführen eines ersten Endes eines Gasgenerators durch die in dem Gassackmaterial angeordnete erste Öffnung und durch die in der Abdeckung vorgesehene zweite Öffnung, so dass der Gasgenerator eines erste Position einnimmt, wobei
- in der ersten Position das erste Ende des Gasgenerators in die Kammer des Gassacks hineinragt und weiter entfernt von der ersten als von der zweiten Öffnung ist und sich das dem ersten Ende gegenüberliegende zweite Ende des Gasgenerators außerhalb des Gassacks befindet;
- Drehen des Gasgenerators in eine zweite Position, in der sich das erste Ende näher an der ersten als an der zweiten Öffnung befindet.

Insbesondere kann das Drehen des Gasgenerators um etwa 180° erfolgen. Mit Hilfe des erfindungsgemäßen Verfahrens ist der Gasgenerator in Endposition (d.h. in der zweiten Position) so durch eine durch die erste und zweite Öffnung gebildete Durchgangsöffnung geführt, dass der Rand der Durchgangsöffnung dicht an dem Gasgenerator anliegt und so einem Abströmen von Gas aus der Kammer des Gassacks durch die Durchgangsöffnung hindurch entgegengewirkt wird.

Die Erfindung wird im Folgenden anhand von Ausführungsbeispielen unter Bezugnahme auf die Figuren näher erläutert. Es zeigen:
- Fig. 1: einen Ausschnitt eines Gassacks einer Gassackanordnung;
- Fig. 2: den Ausschnitt des Gassacks der Figur 1, der zumindest teilweise aufgeblasen ist;
- Fig. 3: einen Ausschnitt eines Gassacks einer Gassackanordnung;
- Fig. 4A-4F: jeweils einen Ausschnitt eines Gassacks gemäß weiterer Varianten;
- Fig. 5: einen Ausschnitt eines Gassacks einer Gassackanordnung gemäß einer Ausführungsform der Erfindung;
- Fig. 6: einen Ausschnitt eines Gassacks einer Gassackanordnung gemäß einer weiteren Ausführungsform der Erfindung;
- Fig. 7A-7E: Schritte bei der Herstellung eines Gassacks für eine erfindungsgemäße Gassackanordnung;
- Fig. 8A, 8B: Draufsicht bzw. seitliche Ansicht einer weiteren Ausführungsform der erfindungsgemäßen Gassackanordnung;
- Fig. 9A, 9B: Draufsicht bzw. seitliche Ansicht einer weiteren Ausführungsform der erfindungsgemäßen Gassackanordnung;
- Fig. 10A-13B: Ansichten verschiedener Schritte beim Durchführen des erfindungsgemäßen Verfahrens;
- Fig. 14A-16B: Ansichten verschiedener Schritte beim Herstellen einer Variante der erfindungsgemäßen Gassackanordnung;
- Fig. 17A-17L: weitere Varianten der erfindungsgemäßen Gassackanordnung;
- Fig. 17M: eine weitere beispielhafte Variante einer Gassackanordnung;
- Fig. 18: ein Beispiel einer Gassackanordnung;
- Fig. 19A, 19B: weitere Beispiele einer Gassackanordnung;
- Fig. 20: noch eine weitere Ausführungsform der Gassackanordnung.

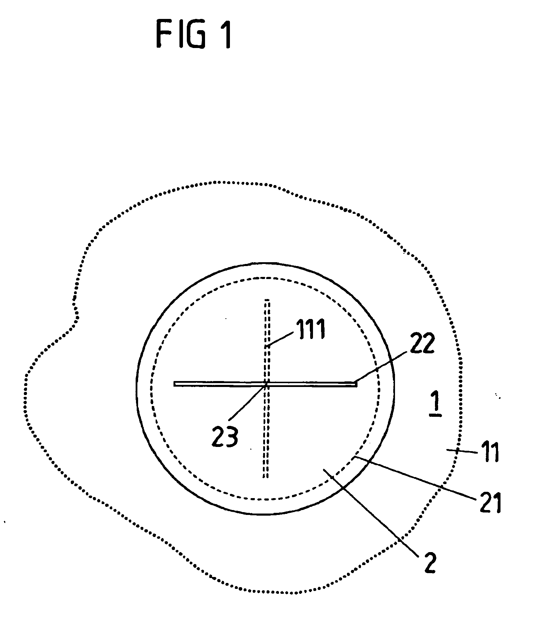

Figur 1 betrifft ein erstes Beispiel eines Gassacks und zeigt einen Ausschnitt eines Gassacks 1, der ein Gassackmaterial in Form einer Gewebelage 11 aufweist, wobei die Gewebelage 11 eine aufblasbare Kammer des Gassacks 1 begrenzt. In der Gewebelage 11 ist eine erste Öffnung in Form eines ersten Schlitzes 111 ausgebildet. Im Bereich des Schlitzes 111 befindet sich eine Abdeckung in Form einer kreisförmigen Funktionslage 2, die den Schlitz 111 mit einem mittleren Bereich überdeckt. Die Funktionslage 2 ist mittels einer Umfangsnaht 21 mit der Gewebelage 11 des Gassacks 1 verbunden.

In der Funktionslage 2 ist eine zweite Öffnung in Form eines zweiten Schlitzes 22 ausgebildet, der den ersten Schlitz 111 senkrecht kreuzt. Es entsteht ein Überlappungsbereich 23, in dem der erste Schlitz 111 und der zweite Schlitz 22 überlappen, so dass das Innere des Gassacks (die durch die Gassacklage 11 gebildete Kammer) durch den ersten und den zweiten Schlitz 111, 22, d.h. insbesondere durch den Überlappungsbereich 23, hindurch von außen zugänglich ist.

In dem ersten Beispiel ist die Funktionslage 2 an einer Außenseite der Gassacklage 11 angeordnet. Alternativ oder zusätzlich wäre möglich, die Funktionslage oder auch eine weitere Funktionslage an einer Innenseite des Gassacks, das heißt an einer Seite der Gassacklage 11, die der durch die Gassacklage 11 gebildeten aufblasbaren Kammer des Gassacks, zugewandt ist, vorzusehen.

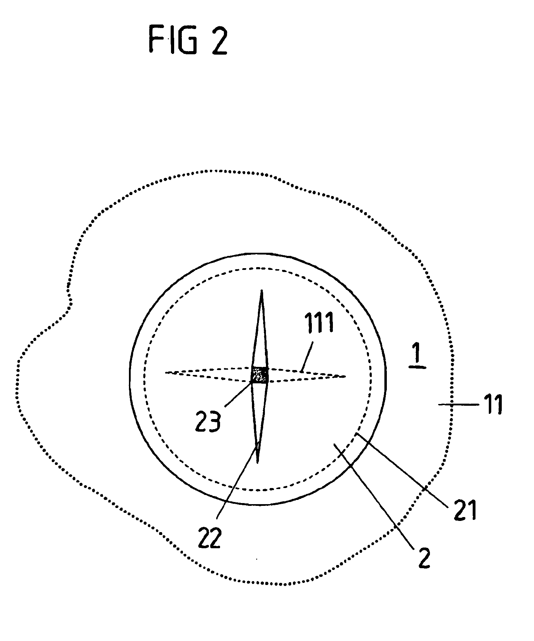

Figur 2 bezieht sich auf ein zweites Beispiel eines Gassacks und entspricht im Wesentlichen dem in Figur 1 dargestellten Beispiel. In einer Gassacklage 11 ist ein erster Schlitz 111 ausgebildet, der von einer Funktionslage 2 überdeckt ist. In der Funktionslage 2 ist ein zweiter Schlitz 22 angeordnet, der senkrecht zum ersten Schlitz 111 orientiert ist und mit dem ersten Schlitz in einem Überlappungsbereich 23 überlappt.

Beim Aufblasen des Gassacks 1 wird durch den Innendruck des Gassacks die Gassacklage 11 und die Funktionslage 2 gedehnt, so dass sich die Schlitze 111 und 22 aufweiten. Dadurch wird insbesondere der Überlappbereich 23 und somit die Ausströmöffnung, die durch den ersten und den zweiten Schlitz gebildet wird, vergrößert, wobei das Maß der Vergrößerung abhängig von dem im Gassack herrschenden Innendruck ist. Je größer der Innendruck ist, desto stärker dehnt sich das Gassackmaterial 11 und das Material der Funktionslage 2, so dass der erste und der zweite Schlitz 111, 22 zusammen eine druckabhängige, d.h. adaptive, Ausströmöffnung bilden.

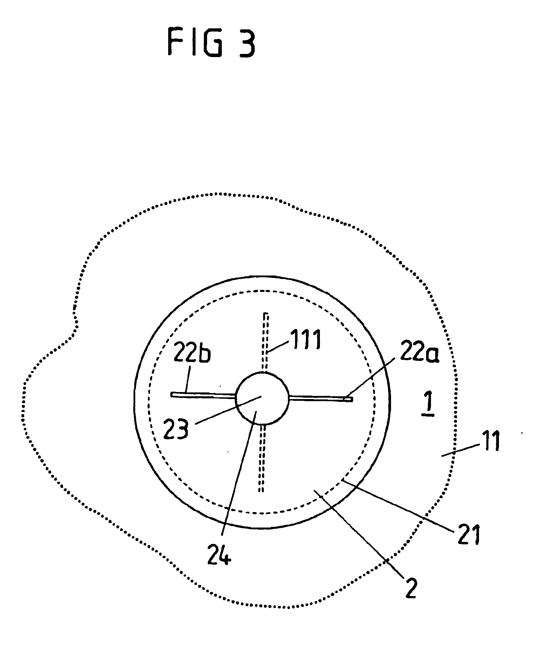

Figur 3 zeigt einen Ausschnitt aus einem Gassack einer Gassackanordnung gemäß einem dritten Variante eines Gassacks. Diese Variante entspricht ebenfalls im Wesentlichen dem ersten Beispiel, jedoch ist die zweite Öffnung, die in der außen am Gassack befestigten Funktionslage 2 ausgebildet ist, nicht rein schlitzförmig ausgebildet, sondern weist einen kreisförmigen Bereich 24 auf, von dem sich radial zwei einander gegenüberliegende schlitzförmige Bereiche 22a, 22b erstrecken. Durch die zusätzliche kreisförmige Öffnung 24 vergrößert sich ein Überlappbereich 23 mit einem in der Gassacklage 11 ausgebildeten ersten Schlitz 111, wodurch eine Ausströmöffnung mit einer größeren effektiven Öffnung entsteht, so dass ein größerer Gasstrom aus dem Gassack ausströmen kann.

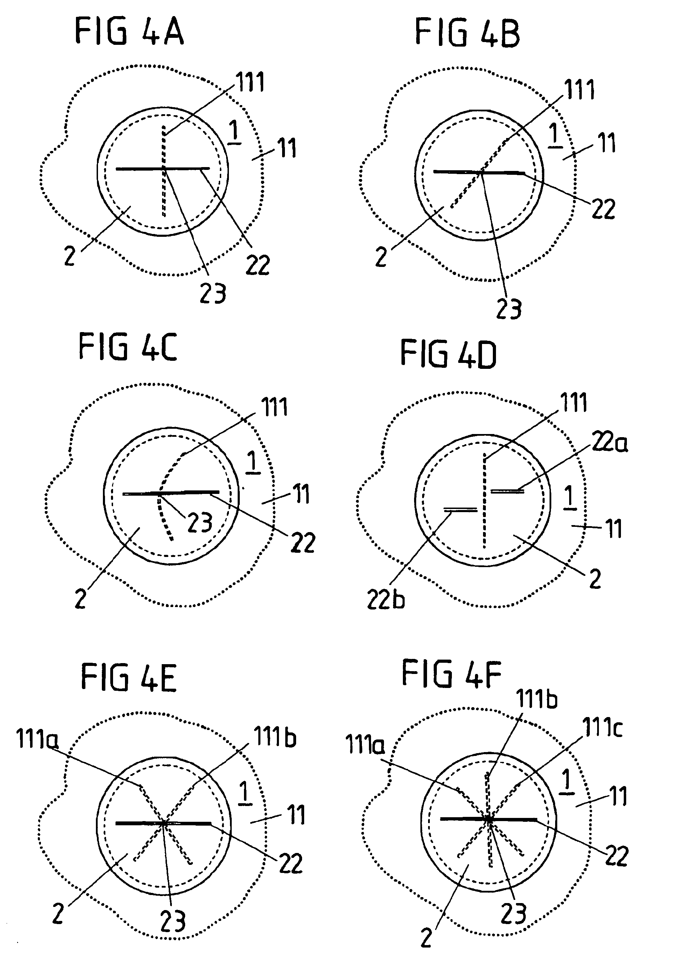

Die Figuren 4A bis 4F betreffen verschiedene Beispiele schlitzförmiger erster und zweiter Öffnungen 111, 22, die in einer Gassacklage 11 bzw. in einer Funktionslage 2 ausgebildet sind.

Figur 4A entspricht dem Beispiel der Figur 1, wonach sich eine schlitzförmige erste und eine schlitzförmige zweite Öffnung senkrecht kreuzen. Im Beispiel der Figur 4B kreuzen sich die schlitzförmige erste Öffnung 111 und die schlitzförmige zweite Öffnung 22 nicht unter einem senkrechten Winkel, sondern verlaufen schräg zueinander, so dass sie einen spitzen Winkel einschließen.

In Figur 4C ist die erste schlitzförmige Öffnung 111 gekrümmt ausgebildet, wobei sie dennoch die in der Funktionslage 2 ausgebildete Öffnung 22 kreuzt und mit dieser einen Überlappungsbereich 23 bildet.

Gemäß Figur 4D weist die Gassacklage 11 einen einzelnen ersten Schlitz 111 auf, während die Funktionslage 2 zwei zweite Öffnungen in Form zweier Schlitze 22a und 22b aufweist. Die Schlitze 22a und 22b sind parallel zueinander angeordnet, wobei sie senkrecht zum ersten Schlitz 111 und in einer Richtung entlang des Schlitzes 111 versetzt zueinander angeordnet sind. Die zweiten Schlitze 22a, 22b überlappen nicht mit dem ersten Schlitz 111. Die Funktionslage 2 ist jedoch im Bereich des ersten Schlitzes beabstandet zur Gassacklage 11 angeordnet, so dass Gas durch den ersten Schlitz 111 austreten und durch die zweiten Schlitze 22a, 22b hindurch aus dem Gassack ausströmen kann.

Die in Figur 4E dargestellte Variante weist zwei schlitzförmige erste Öffnungen 111a und 111 b auf, die gekreuzt zueinander verlaufen. In der Funktionslage 2 ist ein einzelner zweiter Schlitz 22 als zweite Öffnung angeordnet, der winklig sowohl zu dem Schlitz 111a als auch zu dem Schlitz 111b in der Gassacklage 11 verläuft. Die drei Schlitze 111a, 111b und 22 sind so zueinander angeordnet, dass jeweils ein Mittelabschnitt eines Schlitzes mit einem Mittelabschnitt der beiden anderen Schlitze überlappt, wodurch ein in Bezug auf die jeweilige Länge der Schlitze mittiger Überlappbereich 23 entsteht. Zudem sind die Schlitze um jeweils 60 Grad gegeneinander verdreht.

Im Beispiel der Figur 4F sind in der Gassacklage 11 drei erste Öffnungen in Form dreier Schlitze 111 a, 111 b sowie 111 c angeordnet, die über Kreuz zu einem einzelnen in der Funktionslage 2 vorhandenen Schlitz 22 orientiert sind. Die Schlitze 111a, 111 b, 111 c sowie 22 bilden ähnlich der Figur 4E einen mittigen Überlappbereich 23 und sind um einen gemeinsamen Mittelpunkt um einen Winkel von 45 Grad zueinander verdreht angeordnet.

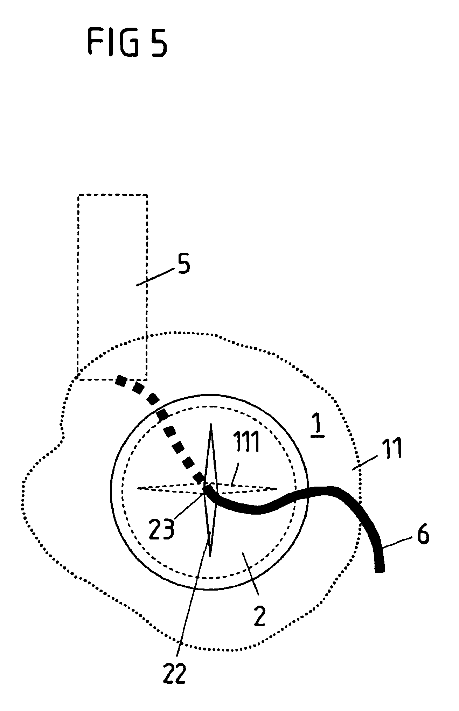

Figur 5 zeigt einen Ausschnitt aus einem Gassack einer Gassackanordnung gemäß einer Ausführungsform der Erfindung. Im Wesentlichen entspricht die Ausführung dem zweiten Beispiel, das in der Figur 2 dargestellt ist. Eine Gassacklage 11 weist eine schlitzförmige erste Öffnung 111 auf, die von einer Funktionslage 2 überdeckt ist. In der Funktionslage 2 ist eine ebenfalls schlitzförmige zweite Öffnung 22 ausgebildet, die die erste Öffnung 111 senkrecht kreuzt. In einem Überlappungsbereich 23, in dem die erste Öffnung 111 mit der zweiten Öffnung 22 überlappt, entsteht ein Zugang zu einer durch die Gassacklage 11 begrenzten Kammer des Gassacks 1.

In der Kammer des Gassacks 1 ist ein Gasgenerator 5 zum Aufblasen der Kammer angeordnet. Der Gasgenerator 5 ist über eine elektrische Verbindungsleitung in Form eines Zündkabels 6 mit einer außerhalb des Gassacks 1 angeordneten Steuereinrichtung (nicht dargestellt) verbunden. Das Zündkabel 6 wird durch den die erste Öffnung 111 und die zweite Öffnung 22 gebildeten Überlappbereich 23 aus der Kammer des Gassacks 1 aus dem Gassack 1 herausgeführt. Die erste und die zweite Öffnung 111, 22 können so angeordnet und ausgebildet sein, dass der Überlappbereich 23 ausschließlich als Durchführung für das Kabel 6 ausgebildet ist. In einer anderen Variante sind die Öffnungen 111 und 22 so angeordnet und ausgebildet, dass sie sowohl einen Zugang für das Zündkabel als auch eine adaptive Ausströmöffnung bilden, über die Gas aus dem Gassack ausströmen kann.

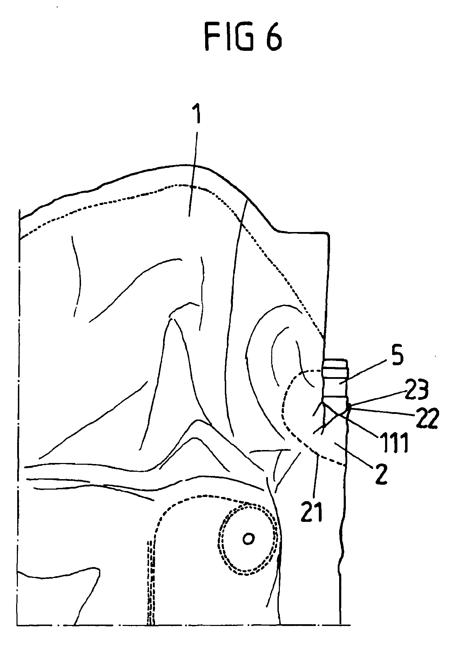

Figur 6 zeigt eine weitere Variante einer erfindungsgemäßen Gassackanordnung. Dargestellt ist ein Gassack 1 in einer Außenansicht. Der Gassack 1 weist in einer Gassacklage eine erste Öffnung 111 auf, die von einer Funktionslage 2 überdeckt ist, wobei die Funktionslage mittels einer Naht 21 an einer Innenseite des Gassacks 1 angenäht ist und deshalb in Figur 6 nicht zu sehen ist. In der Funktionslage 2 ist eine zweite Öffnung angeordnet, die mit der ersten Öffnung 111 überlappt, so dass ein Überlappbereich 23 entsteht, der einen Zugang zum Gassackinneren bildet. Durch den Überlappbereich 23 ragt ein Gasgenerator 5 mit einem Abschnitt in das Gassackinnere hinein.

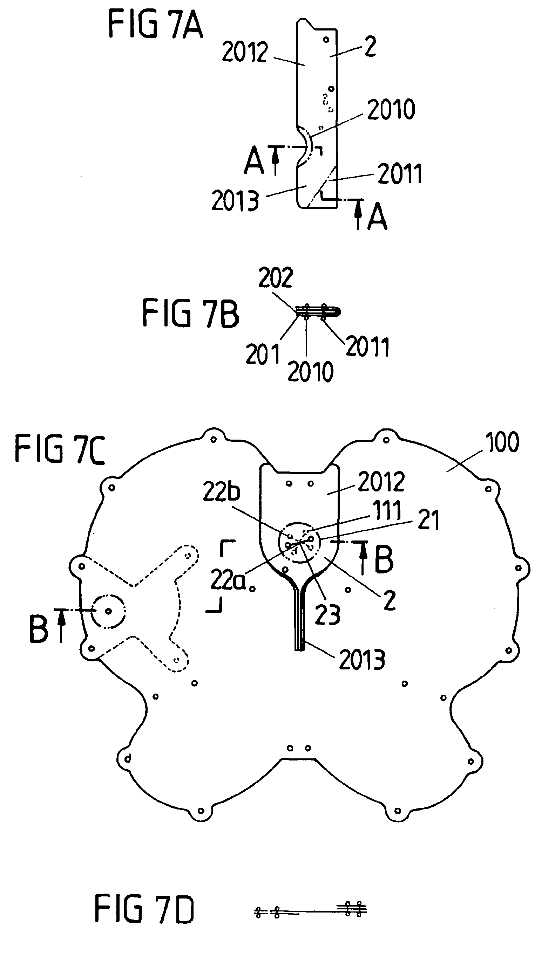

Die Figuren 7A bis 7E betreffen eine Variante zur Herstellung eines Gassacks für eine Gassackanordnung z.B. gemäß Figur 6. Figur 7A zeigt eine separat zum Gassack gefertigte Abdeckung in Form einer Funktionslage 2. Figur 7B ist eine Schnittansicht der Funktionslage 2 (entlang A-A). Die Funktionslage 2 weist zwei übereinander gelegte Materiallagen 201 und 202 auf und ist an einem Endabschnitt 2013 aufeinander gefaltet, wobei die aufeinander gefalteten Teilabschnitte der Funktionslage 2 mittels zweier Nähte 2010 und 2011 vernäht sind. Ein dem Endabschnitt 2013 abgewandter Abschnitt 2012 der Funktionslage 2 lässt sich hingegen auseinander klappen. In diesem Zustand (auseinander gefalteter Abschnitt 2012 und vernähter Abschnitt 2013) wird die Funktionslage 2 auf einem Gassackzuschnitt 100 angeordnet. Dies ist in Figur 7C dargestellt.

Der Gassackzuschnitt 100 ist ein in Bezug auf eine mittlere Symmetrieachse symmetrischer Gewebezuschnitt, der eine schlitzförmige erste Öffnung 111 (in Figur 7C gestrichelt gezeichnet) aufweist. Die Funktionslage 2 ist so im Bereich der mittleren Symmetrieachse des Gassackzuschnitts 100 angeordnet und mittels einer kreisförmigen Naht 21 mit dem Gassackzuschnitt 100 verbunden, dass sie die erste Öffnung 111 überdeckt. Darüber hinaus ist in jeder der beiden Lagen 201, 202 der Funktionslage 2 jeweils eine schlitzförmige zweite Öffnung 22a bzw. 22b ausgebildet. Die Schlitze 22a, 22b verlaufen winklig zueinander und sind so orientiert, dass sie mit dem ersten Schlitz 111 mit einem mittleren Abschnitt überlappen, so dass die Mitten der Schlitze einen Überlappbereich 23 bilden und ein Zugang zum Inneren des zu bildenden Gassacks entsteht.

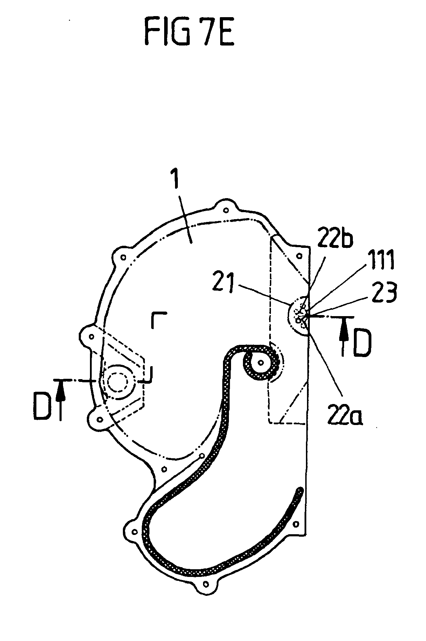

Einen Schnitt (entlang B-B) durch den Gassackzuschnitt 100 der Figur 7C, an dem die Funktionslage 2 angenäht ist, zeigt die Figur 7D. Der aus dem Gassackzuschnitt 100 hergestellte Gassack ist in der Figur 7E dargestellt. Der Gassackzuschnitt 100 ist entlang seiner mittleren Symmetrieachse zusammengefaltet und mittels verschiedener, teilweise entlang seines äußeren Umfangs verlaufender Nähte vernäht, so dass sich die Funktionslage 2 im Innern (z.B. in einer aufblasbaren Kammer) des fertiggestellten Gassacks 1 befindet. Im fertigen Gassack 1 dient die Zugangsöffnung, die durch den Überlappungsbereich 23 der Schlitze 111, 22a, 22b gebildet ist, beispielsweise dazu, einen Teil eines Gasgenerators (nicht dargestellt) in den Gassack hineinragen zu lassen.

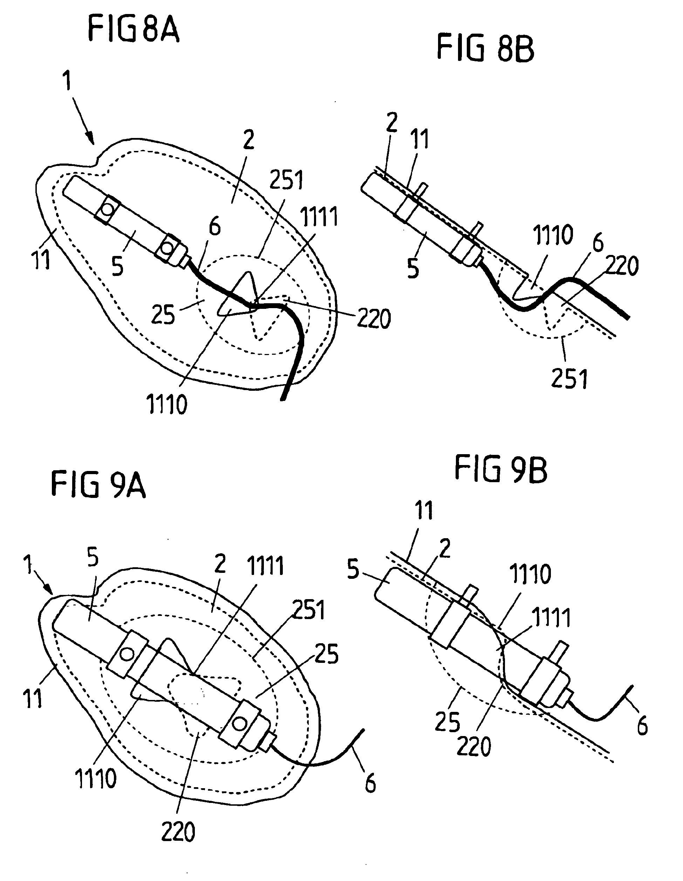

Die Figuren 8A und 8B betreffen einer weitere Ausführungsform der Erfindung, wobei Fig. 8B eine seitliche Ansicht der Anordnung der Figur 8A in "Butterfly"-Darstellung ist. Dargestellt ist ein Teilbereich eines Gassacks 1, der eine aufblasbare Kammer aufweist, die durch eine erste Lage 11 eines Gassackmaterials begrenzt ist. An der Innenseite der Gassacklage 11 ist eine zweite Lage 2 eines Gassackmaterials (angedeutet durch eine gestrichelte Linie, die dem Rand der ersten Lage 11 folgt) angeordnet. Die erste und die zweite Lage 11, 2 können z.B. über eine umlaufende Naht miteinander verbunden sein. In der ersten Gassacklage 11 ist eine erste Öffnung 1110 und in der zweiten Gassacklage 2 eine zweite Öffnung 220 vorgesehen, die jeweils dreieckförmig ausgebildet sind. Die (abgerundeten) Spitzen der Öffnungen 1110 und 220 überlappen, wobei durch den Überlapp eine Durchgangsöffnung 1111 zur Kammer des Gassacks gebildet wird.

In der Kammer des Gassacks 1 ist ein Gasgenerator 5 angeordnet, dessen Zündkabel 6 durch die überlappenden Öffnungen 1110, 220 gebildete Durchgangsöffnung 1111 aus dem Gassackinneren heraus geführt ist. Ein elliptischer Bereich 25 der zweiten Lage 2, der sich um die Öffnungen 1110, 220 herum erstreckt, ist mittels einer Naht 251 (von innen) an die erste Gassacklage 11 angenäht. Die Lagen 11, 2 sind so ausgebildet und die Öffnungen 1110, 220 so zueinander positioniert, dass die Lagen 11, 2 beim Durchführen des Kabels 6 gegeneinander verspannt werden und Randabschnitte der ersten und der zweiten Öffnung 1110, 220, d.h. der Rand der Durchgangsöffnung 1111, nach Montage des Kabels 6 dicht an dem Kabel 6 anliegt.

Die Umnähung 251 der Öffnungen 1110, 220 ist für das Verspannen der Lagen, d.h. für den Abdichteffekt, nicht zwingend erforderlich. Der Effekt kann auch ohne die Umnähung erzielt werden, wobei insbesondere auch andere benachbarte Nähte, z.B. Umfangsnähte oder andere Fixierungsnähte, eine Fixierung der Lagen 11, 2 bewirken, die die Verspannung beeinflusst.

Die Figuren 9A und 9B betreffen eine weitere Variante der Erfindung, wonach sich ein Gasgenerator 5 nicht komplett im Inneren des Gassacks 1 befindet, sondern teilweise aus dem Gassack herausragt. Ähnlich der Figuren 8A, 8B weist der Gassack 1 der Figur 9A, 9B eine erste und eine zweite Lage 11, 2 auf, in der jeweils eine (dreieckförmige) Öffnung 1110 bzw. 220 angeordnet ist, die sich abschnittsweise überlappen, wobei der Überlapp eine Durchgangsöffnung 1111 bildet, durch die das Gassackinnere von außen zugänglich ist. Durch die Durchgangsöffnung 1111 ragt der Gasgenerator 5 von außen in das Gassackinnere, d.h. in die Kammer des Gassacks, hinein.

Des Weiteren sind die Öffnungen 1110, 220 wiederum mit einer Umnähung 251 umgeben, die die zweite Lage 2 mit der ersten Lage 11 verbindet. Die Lagen 11, 2 und die Öffnungen 1110 und 220 sind so ausgebildet und zueinander positioniert, dass die Lagen 11, 2 durch den durch die Öffnungen 1110 und 220 hindurchragenden Gasgenerator so gegeneinander vorgespannt werden, dass der Rand der Durchgangsöffnung 1111 am Gasgenerator 5 anliegt und die Durchgangsöffnung 1111 somit abgedichtet ist.

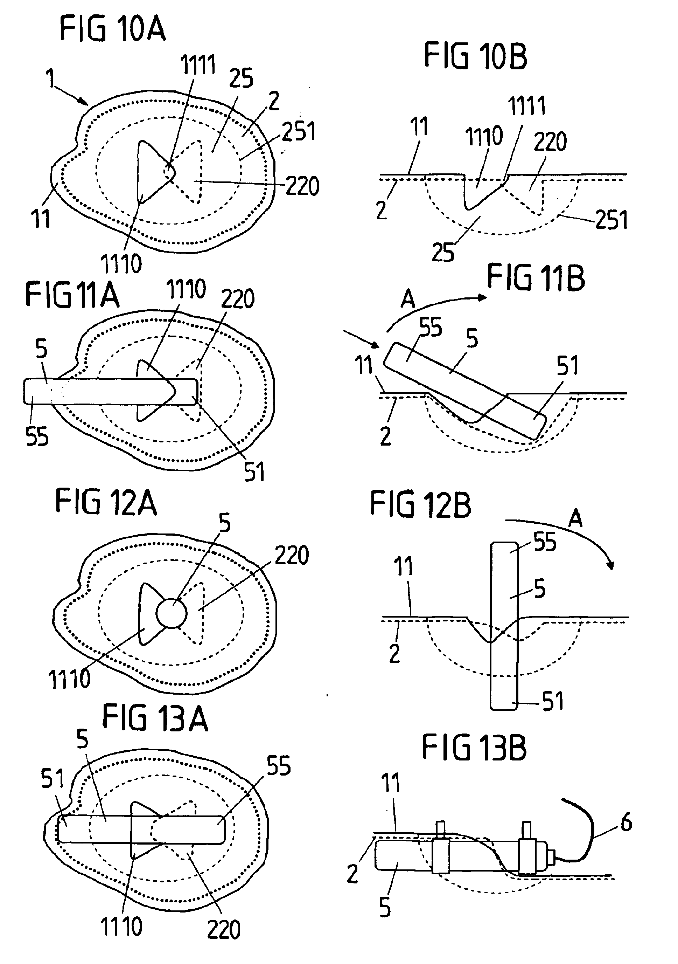

In den Figuren 10A bis 13B ist dargestellt, wie ein Gas generator durch die Öffnungen 1110, 220 hindurchgeführt und in die in Figur 9A gezeigte Endposition gebracht werden kann. Die Figuren 10A, 10B zeigen den Gassack ohne Gasgenerator, wobei die Gassackanordnung derjenigen der Figur 9A und 9B entspricht. Die Figuren 10B bis 13B zeigen die Anordnung jeweils in seitlicher Butterfly-Ansicht.

Der Gasgenerator 5 wird folgendermaßen in den Gassack 1 eingeführt: Zunächst wird ein erstes Ende 51 des (Rohr-)gasgenerators 5 durch die (äußere) erste und die (innere) zweite Öffnung 1110, 220 eingeschoben, so dass das Ende 51 in die Kammer des Gassacks hineinragt und sich ein zweites Ende 55 des Gasgenerators, das dem ersten Ende 51 gegenüberliegt, außerhalb des Gassacks 1 befindet. Hierbei können die Lagen 11, 2 so dehnbar ausgebildet sein, dass sie sich beim Einführen des Gasgenerators etwas dehnen und das Ende 51 problemlos in die Kammer des Gassacks eingeführt werden kann. In dieser ersten Position befindet sich das erste Ende 51 weiter entfernt von der zweiten als von der ersten Öffnung (Fig. 11A, 11 B).

Anschließend wird der Gasgenerator 5 um etwa 180° (entlang des Pfeils A; vgl. Figuren 11 B bis 13B) in eine zweite Position (Endposition) gedreht (Figur 13A, die der Figur 9A entspricht). In der Endposition liegt das erste Ende 51 näher an der ersten als an der zweiten Öffnung.

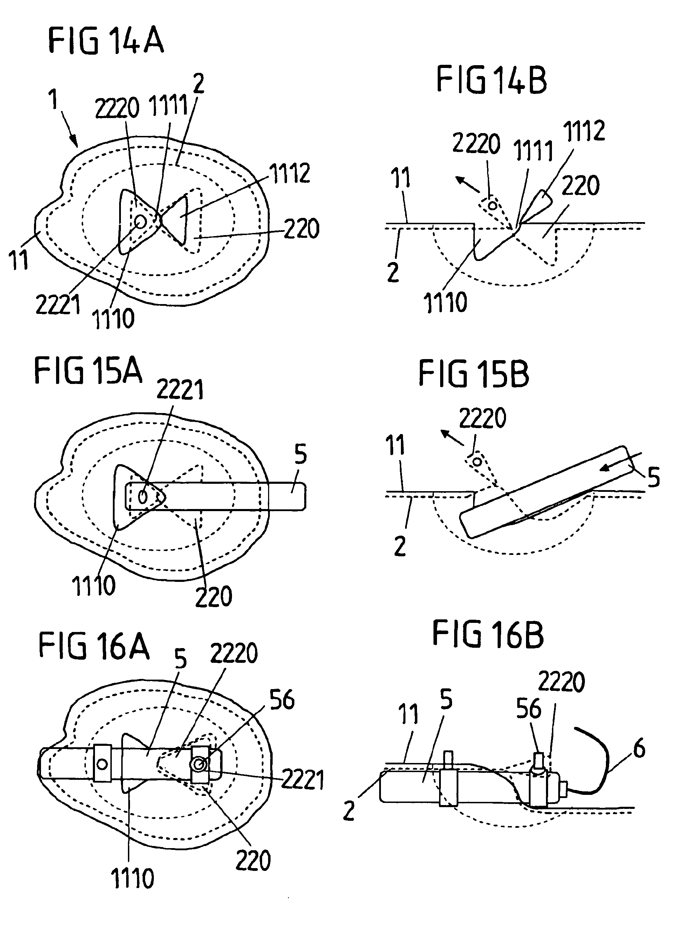

Alternativ kann der Gasgenerator auch direkt "in richtiger Richtung" eingeführt werden, d.h. ohne eine 180°-Drehung vorzunehmen. Dies ist in den Figuren 14A bis 16B dargestellt, wobei die Figuren 14B bis 16B wiederum eine Butterfly-Darstellung sind.

Der Gasgenerator 5 wird in dieser Variante direkt in der Orientierung der gewünschten Endposition durch die Durchgangsöffnung 1111, die durch den Überlapp der ersten Öffnung 1110 und der zweiten Öffnung 220 gebildet ist, eingeführt, wobei die Gassacklagen 11, 2 so dehnbar gestaltet sein können, dass dies problemlos möglich ist. Der Gasgenerator 5 wird durch die Durchgangsöffnung 1111 bis zu seiner Endposition eingeführt (Figur 16A).

In dem Ausführungsbeispiel der Figuren 14A bis 16B grenzen an die Öffnungen 1110 bzw. 220 eine erste Lasche 1112 bzw. eine zweite Lasche 2220 an, wobei die Laschen 2220, 1112 ebenfalls Dreiecksform haben und mit ihrer Spitze mit dem Rand der Spitze der jeweiligen Öffnung verbunden sind. Die Laschen entstehen z.B. durch entsprechendes Ausschneiden (oder Ausstanzen) der Öffnungen 1110, 220, wobei im Bereich der jeweiligen Spitzen der dreieckförmigen Öffnungen 1110, 220 der Schnitt unterbrochen ist.

Die Laschen 2220, 1112 sind so umgebogen, so dass sie in den Bereich der jeweils anderen Öffnung hineinragen; vgl. insbesondere Figuren 14B und 15B. Nach Einführen des Gasgenerators 5 wird die (innere) zweite Lasche 2220 zurück in Richtung auf die zweite Öffnung 220 umgeklappt und mit einem Befestigungsbolzen 56 an dem Gasgenerator 5 (bzw. an einer Schelle, die den Gasgenerator 5 umgibt) befestigt. Hierzu weist die Lasche 2220 eine Befestigungsstruktur in Form einer Öffnung 2221 auf, durch die der Bolzen 56 hindurchgreift.

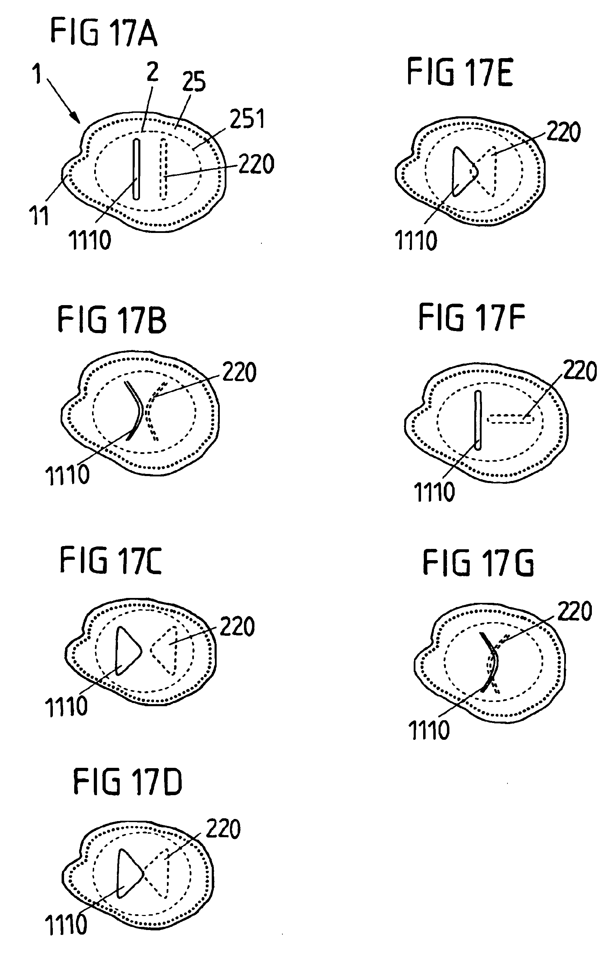

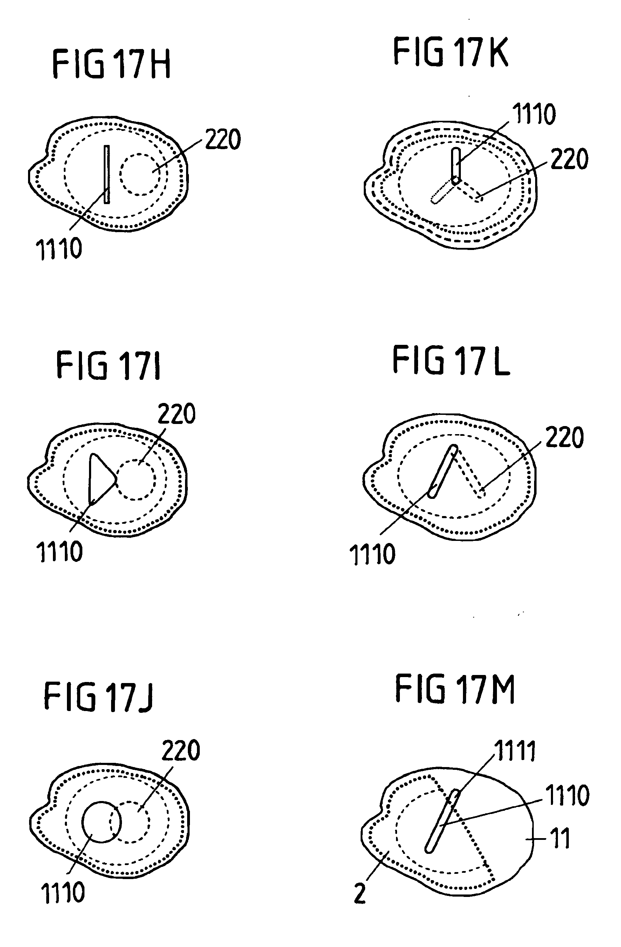

Weitere Ausgestaltungs- bzw. Anordnungsvarianten von ersten und zweiten Öffnungen, die sich z.B. auch zum Durchführen eines Gasgenerators eignen, sind in den Figuren 17A bis 17K dargestellt. Beispielsweise müssen die erste und die zweite Öffnung 1110, 220 nicht unbedingt einander überlappend angeordnet sein (vgl. Fig. 17A-17D, 17F, 17H, 171). Des Weiteren müssen die Öffnungen natürlich nicht dreieckförmig ausgebildet sein, sondern können - wie bereits in den Figuren 4A bis 4F gezeigt - insbesondere auch schlitzförmig sein. Andere Geometrien sind selbstverständlich ebenfalls von der Erfindung erfasst, z.B. gekrümmte Öffnungen (Figur 17B, 17G) oder kreisförmige Öffnungen (Figuren 17H bis 17J) bzw. Kombinationen unterschiedlich gearteter Öffnungen.

Es ist auch möglich, mehr als zwei Öffnungen vorzusehen, wobei z.B. zusätzlich zu der ersten und der zweiten Gassacklage 11, 2 eine dritte bzw. mehrere zusätzliche Lagen vorgesehen sein können. In jeder der Lagen kann eine Öffnung angeordnet sein, die einen Zugang zu der Kammer des Gassacks ermöglichen. Die Öffnungen können sich mit einem Abschnitt überlappen (wie in Figur 17K gezeigt); dies ist jedoch nicht zwingend erforderlich.

Gemäß einem nicht erfindungsgemäßen Beispiel eines Gassacks weist die zweite Lage 2 keine Öffnung auf, sondern deckt nur einen Teil der ersten Öffnung 1110 ab (Fig. 17M). Der Abschnitt der Öffnung 1110, der durch die zweite Lage 2 nicht abgedeckt ist, bildet dann die Durchgangsöffnung 1111 zur Kammer des Gassacks.

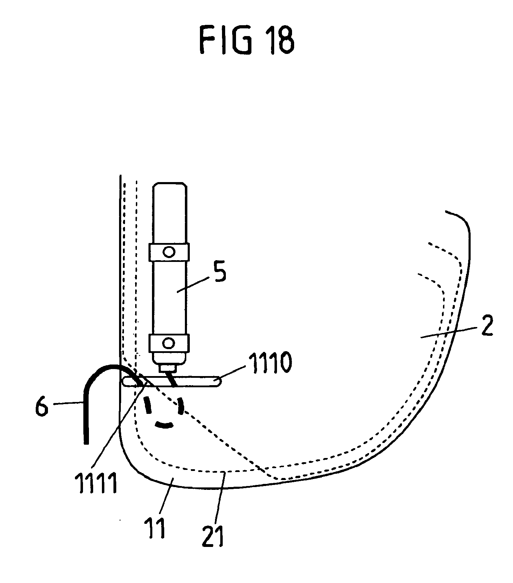

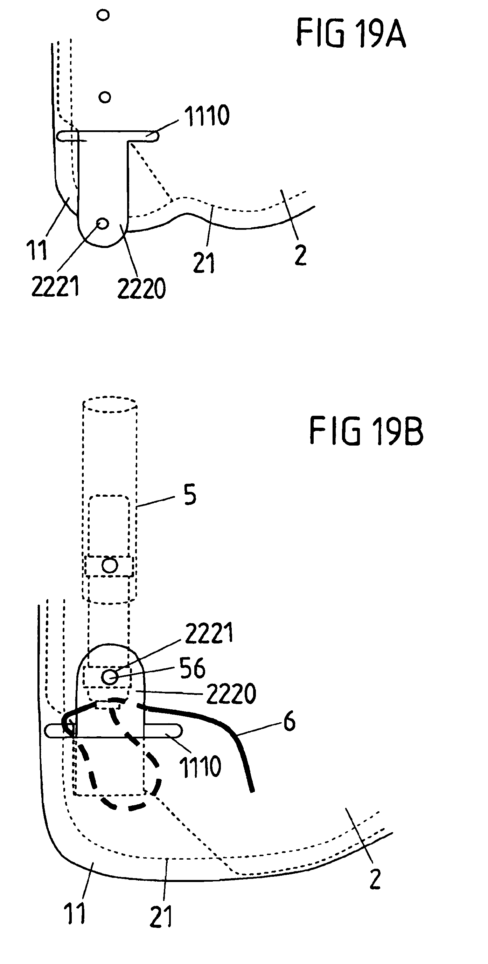

Eine ähnliche, nicht erfindungsgemäße Variante betreffen die Figuren 18, 19A und 19B. Hier überdeckt die zweite (innere) Lage 2 ebenfalls nur einen Teil der ersten Öffnung 1110. Der Rand der zweiten Lage 2 ist durch eine gestrichelte Linie gekennzeichnet. Die erste Öffnung 1110 ist so angeordnet, dass sie durch eine Umfangsnaht 21 geteilt ist, die Gassacklagen miteinander verbindet, die die Kammer des Gassacks bilden. Ein Abschnitt der ersten Öffnung 1110, der sich zwischen der Umfangsnaht 21 und dem Rand der zweiten Lage 2 erstreckt, bildet die Durchgangsöffnung 1111. Durch die Durchgangsöffnung 1111 ist ein Zündkabel 6 eines Gasgenerators hindurchgeführt.

Die Figuren 19A und 19B stellen eine Abwandlung der Variante der Fig. 18 dar. Hier weist die zweite Lage 2 im Bereich der ersten Öffnung 1110 eine Lasche 2220 auf, die durch die (längliche) Öffnung 1110 nach außen geführt ist (Fig. 19A). Anschließend kann sie in Richtung auf den Gasgenerator (in Fig. 19A nicht dargestellt; vgl. Fig. 19B) umgebogen und mit einem Ende an diesem befestigt werden, wozu eine Befestigungsstruktur (Öffnung 2221) vorgesehen ist, über die die Lasche an einem Bolzen des Gasgenerators festgelegt werden kann.

In einer anderen Variante (Fig. 19B) ist die Lasche 2220 in der Kammer des Gassacks in Richtung auf den Gasgenerator 5 umgebogen und mit einem Ende durch die Öffnung 1110 nach außen geführt. Das nach außen geführte Ende der Lasche 2220 ist über das Kabel 6 gelegt und über die in dem nach außen geführten Ende vorgesehene Öffnung 2221 an einem Befestigungsbolzen 56 des Gasgenerators 5 befestigt.

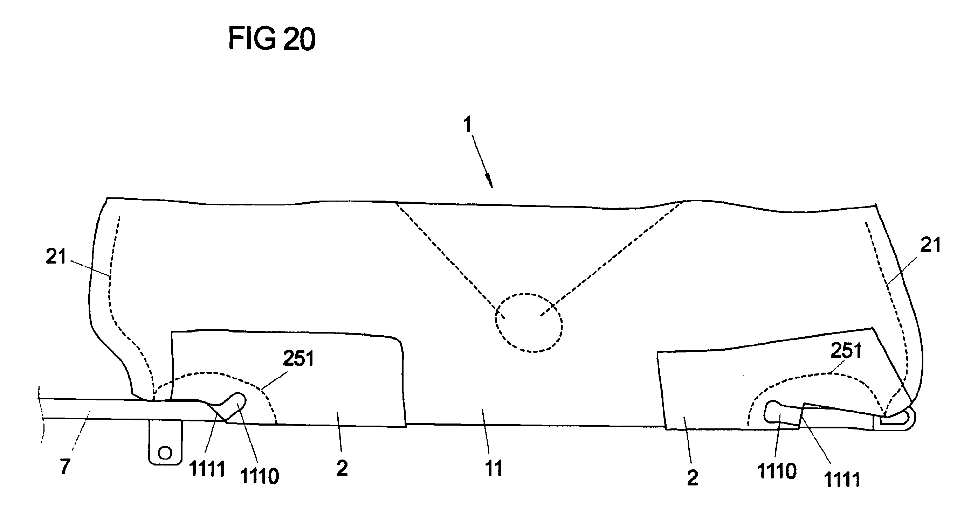

Eine weitere Ausführungsform der erfindungsgemäßen Gassackanordnung zeigt Fig. 20. Ein Gassack 1 weist zwei Durchgangsöffnungen 1111 auf, die jeweils durch sich überlappende erste und zweite Öffnungen in einer ersten Lage 11 und einer zweite Lage 2 gebildet sind. Die ersten und zweiten Öffnungen verlaufen jeweils V-förmig (vgl. Fig. 17L).

Durch die Durchgangsöffnungen 1111 erstreckt sich ein Gasleitrohr (Gaslanze) 7 hindurch. Das Gasleitrohr 7 ist z.B. Bestandteil einer Kopf-Airbag-Anordnung.

### Bezugszeichenliste

- 1: Gassack
- 11: Gassacklage
- 111, 111a, 111b, 111c: erster Schlitz
- 1110: erste Öffnung
- 1111: Durchgangsöffnung
- 1112: erste Lasche
- 100: Gassackzuschnitt
- 2: Funktionslage
- 21: Umfangsnaht
- 22, 22a, 22b: zweiter Schlitz
- 220: zweite Öffnung
- 23: Überlappbereich
- 24: kreisförmige Öffnung
- 25: Abschnitt
- 251: Naht
- 201: erste Lage
- 202: zweite Lage
- 2010, 2011: Naht
- 2012: Abschnitt
- 2013: Endabschnitt
- 2220: zweite Lasche
- 2221: Öffnung
- 5: Gasgenerator
- 51: erstes Ende
- 55: zweites Ende
- 56: Bolzen
- 6: Zündkabel
- 7: Gasleitrohr

## Patentansprüche

1. Gassackanordnung für ein Fahrzeuginsassen-Rückhaltesystem, mit
- einem Gassack (1), der mindestens eine aufblasbare Kammer und mindestens eine erste Öffnung (111, 111 a, 111 b, 111 c, 1110) aufweist; und
- einer Abdeckung (2), die die erste Öffnung (111, 111 a, 111 b, 111 c) des Gassacks (1) zumindest teilweise überdeckt und die mindestens eine zweite Öffnung (22, 22a, 22b, 220) aufweist, wobei
- die erste und die zweite Öffnung (111, 111a, 111b, 111c, 1110, 22, 22a, 22b, 220) so ausgebildet und angeordnet sind, dass die Kammer des Gassacks (1) durch die erste und die zweite Öffnung (111, 111a, 111b, 111c, 1110, 22, 22a, 22b, 220) hindurch zugänglich ist, wobei
- die erste Öffnung (111, 111 a, 111 b, 111 c, 1110) in einer ersten Lage (11) eines Gassackmaterials und die zweite Öffnung (22, 22a, 22b, 220) in einer zweiten Lage (2) eines Gassackmaterials ausgebildet ist,
**gekennzeichnet durch**
mindestens ein Bauteil (5, 6), das **durch** die erste und die zweite Öffnung (111, 111a, 111b, 111c, 1110, 22, 22a, 22b, 220) hindurch in den Gassack (1) hineinragt, wobei die erste und die zweite Lage (11, 2) **durch** das in den Gassack (1) hineinragende Bauteil (5, 6) im Bereich der ersten und der zweiten Öffnung so gegeneinander verspannt sind, dass ein Abschnitt des Randes der ersten Öffnung und ein Abschnitt des Randes der zweiten Öffnung dicht an dem Bauteil (5, 6) anliegen.

2. Gassackanordnung nach Anspruch 1, **dadurch gekennzeichnet, dass** die erste und die zweite Öffnung (111, 111 a, 111 b, 111 c, 1110 22, 22a, 22b, 220) so ausgebildet und angeordnet sind, dass Gas durch die erste und zweite Öffnung (111, 111a, 111 b, 111 c, 1110, 22, 22a, 22b, 220) hindurch aus der Kammer des Gassacks (1) ausströmen kann.

3. Gassackanordnung nach einem der vorhergehenden Ansprüche, **dadurch gekennzeichnet, dass** die Abdeckung (2) aus einem Gassackmaterial gebildet ist.

4. Gassackanordnung nach einem der vorhergehenden Ansprüche, **dadurch gekennzeichnet, dass** die erste und die zweite Öffnung (111, 111a, 111b, 111c, 1110, 22, 22a, 22b, 220) so ausgebildet und angeordnet sind, dass die Kammer des Gassacks (1) von außerhalb des Gassacks (1) zugänglich ist.

5. Gassackanordnung nach einem der vorhergehenden Ansprüche, **dadurch gekennzeichnet, dass** die erste und die zweite Öffnung (111, 111a, 111b, 111c, 1110, 22, 22a, 22b, 220) so ausgebildet und angeordnet sind, dass die Kammer des Gassacks (1) von einer weiteren Kammer des Gassacks (1) aus zugänglich ist.

6. Gassackanordnung nach einem der vorhergehenden Ansprüche, **dadurch gekennzeichnet, dass** die erste und/oder die zweite Öffnung (111, 111a, 111b, 111c, 1110, 22, 22a, 22b, 220) in einem dehnbaren Material ausgebildet sind, so dass die Größe der ersten und/oder der zweiten Öffnung (111, 111a, 111b, 111c, 1110, 22, 22a, 22b, 220) vom Innendruck im Gassack (1) abhängt.

7. Gassackanordnung nach einem der vorhergehenden Ansprüche, **dadurch gekennzeichnet, dass** die erste und die zweite Öffnung (111, 111a, 111b, 111c, 1110, 22, 22a, 22b, 220) zumindest abschnittsweise einander überlappen.

8. Gassackanordnung nach einem der vorhergehenden Ansprüche, **dadurch gekennzeichnet, dass** sich die erste und die zweite Öffnung (111, 111a, 111b, 111c, 1110, 22, 22a, 22b, 220) kreuzen.

9. Gassackanordnung nach einem der vorhergehenden Ansprüche, **dadurch gekennzeichnet, dass** der Gassack (1) mehrere Lagen aufweist und in mindestens zwei der Lagen jeweils mindestens eine erste Öffnung (111, 111 a, 111 b, 111 c, 1110) ausgebildet ist.

10. Gassackanordnung nach einem der vorhergehenden Ansprüche, **dadurch gekennzeichnet, dass** die Abdeckung (2) mehrere Lagen (201, 202) aufweist und in mindestens zwei der Lagen (201, 202) jeweils mindestens eine zweite Öffnung (22a, 22b) ausgebildet ist.

11. Gassackanordnung nach einem der vorhergehenden Ansprüche, **dadurch gekennzeichnet, dass** die erste Öffnung (111, 111a, 111b, 111c, 1110) in einem zum Gassack (1) separat gefertigten Teil ausgebildet ist, das mit dem Gassack (1) verbunden ist.

12. Gassackanordnung nach Anspruch 11, **dadurch gekennzeichnet, dass** das Bauteil ein Gasgenerator (5) ist, der zumindest abschnittsweise in den Gassack (1) hineinragt.

13. Gassackanordnung nach einem der vorhergehenden Ansprüche, **dadurch gekennzeichnet, dass** an die erste und/oder die zweite Öffnung (111, 111a, 111b, 111c, 1110, 22, 22a, 22b, 220) eine Lasche (1112, 2220) angrenzt, die so biegbar ist, dass die erste bzw. die zweite Öffnung durch Biegen der Lasche zumindest teilweise freigegeben werden kann.

14. Verfahren zum Herstellen eines Gassackmoduls unter Verwendung einer Gassackanordnung nach einem der vorhergehenden Ansprüche, wobei die Abdeckung (2) innen an einem Gassackmaterial, das die Kammer des Gassacks begrenzt, angeordnet ist, **gekennzeichnet durch** die Schritte:
- Hindurchführen eines ersten Endes (51) eines Gasgenerators (5) **durch** die in dem Gassackmaterial angeordnete erste Öffnung (111, 111a, 111b, 111c, 1110) und **durch** die in der Abdeckung vorgesehene zweite Öffnung (22, 22a, 22b, 220), so dass der Gasgenerator (5) eine erste Position einnimmt, wobei
- in der ersten Position das erste Ende (51) in die Kammer des Gassacks (1) hineinragt und weiter entfernt von der ersten als von der zweiten Öffnung ist und sich das dem ersten Ende (51) gegenüberliegende zweite Ende des Gasgenerators (5) außerhalb des Gassacks (1) befindet; und
- Drehen des Gasgenerators (5) in eine zweite Position, in der sich das erste Ende (51) näher an der ersten als an der zweiten Öffnung befindet.

15. Verfahren nach Anspruch 14, **dadurch gekennzeichnet, dass** das Drehen des Gasgenerators um etwa 180° erfolgt.

## Claims

1. Airbag arrangement for a vehicle occupant restraint system, with
- an airbag (1) that comprises at least one inflatable chamber and at least one first opening (111, 111a, 111b, 111c, 1110); and
- a cover (2) that at least partially covers the first opening (111, 111 a, 111b, 111 c) of the airbag (1) and that comprises at least one second opening (22a, 22b, 220), wherein
- the first and the second opening (111, 111 a, 111 b, 111 c, 1110, 22, 22a, 22b, 220) are designed and arranged such that the chamber of the airbag (1) is accessible through the first and the second opening (111, 111a, 111b, 111c, 1110, 22, 22a, 22b, 220), wherein
- the first opening (111, 111 a, 111b, 111 c, 1110) is designed in a first layer (11) of an airbag material and the second opening (22, 22a, 22b, 220) is designed in a second layer (2) of an airbag material
**characterized by**
at least one part (5, 6) which projects into the airbag (1) through the first and the second opening (111, 111 a, 111 b, 111 c, 1110, 22, 22a, 22b, 220), whereby the first and the second layer (11, 2) are restrained by the part (5, 6) projecting into the airbag (1) in the area of the openings such that a section of the rim of the first and a section of the rim of the second opening rest closely against the part (5, 6).

2. Airbag arrangement according to claim 1, **characterised in that**, the first and the second opening (111, 111a, 111 b, 111c, 1110, 22, 22a, 22b, 220) are designed and arranged such that gas can flow out of the chamber of the airbag (1) through the first and second opening (111, 111a, 111b, 111c, 1110, 22, 22a, 22b, 220).

3. Airbag arrangement according to one of the preceding claims, **characterised in that**, the cover (2) is designed of an airbag material.

4. Airbag arrangement according to one of the preceding claims, **characterised in that**, the first and the second opening (111, 111a, 111b, 111c, 1110, 22, 22a, 22b, 220) are designed and arranged such that the chamber of the airbag (1) is accessible from the outside of the airbag (1).

5. Airbag arrangement according to one of the preceding claims, **characterised in that**, the first and the second opening (111, 111a, 111b, 111c, 1110, 22, 22a, 22b, 220) are designed and arranged such that the chamber of the airbag (1) is accessible from a further chamber of the airbag (1).

6. Airbag arrangement according to one of the preceding claims, **characterised in that**, the first and/or the second opening (111, 111a, 111b, 111c, 1110, 22, 22a, 22b, 220) are designed in a stretchable material such that the size of the first and/or the second opening (111, 111a, 111b, 111c, 1110, 22, 22a, 22b, 220) depend on the internal pressure of the airbag (1).

7. Airbag arrangement according to one of the preceding claims, **characterised in that**, the first and the second opening (111, 111 a, 111 b, 111 c, 1110, 22, 22a, 22b, 220) overlap each other at least in sections.

8. Airbag arrangement according to one of the preceding claims, **characterised in that**, the first and the second opening (111, 111 a, 111 b, 111 c, 1110, 22, 22a, 22b, 220) intersect.

9. Airbag arrangement according to a one of the preceding claims, **characterised in that**, the airbag (1) has multiple layers and at least one opening (111, 111 a, 111b, 111c, 1110) is formed in at least two of the layers, respectively.

10. Airbag arrangement according to one the preceding claims, **characterised in that**, the cover (2) has multiple layers (201, 202) and at least a second opening (22a, 22b) is formed in at least two of the layers (201, 202), respectively.

11. Airbag arrangement according to one of the preceding claims, **characterised in that**, the first opening (111, 111 a, 111b, 111c, 1110) is formed in a part manufactured separately from the airbag (1) which is connected to the airbag (1).

12. Airbag arrangement according to claim 11, **characterised in that**, the part is a gas generator (5) which at least projects in sections into the airbag (1).

13. Airbag arrangement according to one of the preceding claims, **characterised in that**, a flap (1112, 2220) adjoins to the first and/ or the second opening (111, 111 a, 111b, 111c, 1110, 22, 22a, 22b, 220) which is so flexible that the first or the second opening can be at least partially released by bending the flap.

14. Method for the production of an airbag module using an airbag arrangement according to one of the preceding claims whereby the cover (2) is arranged in the inside on an airbag material which delimits the chamber of the airbag **characterised by** the steps:
- passing a first end (51) of a gas generator (5) through the first opening (111, 111a, 111b, 111c, 1110) arranged in the airbag material and through the second opening (22, 22a, 22b, 220) provided in the cover such that the gas generator takes a first position, whereby
- in the first position the first end (51) projects into the chamber of the airbag (1) and is further away from them first than from the second opening and the second end of the gas generator (5) opposing the first end (51) is outside of the airbag (1); and
- turning the gas generator (5) into a second position in which the first end (51) is closer to the first than to the second opening.

15. Method according to claim 14, **characterised in that**, the turning of the gas generator is carried out at about 180°.

## Revendications

1. Système d'airbag pour un système de retenue d'occupants d'un véhicule, comprenant
- un coussin gonflable (1) qui comprend au moins une chambre gonflable et au moins une première ouverture (111, 111 a, 111 b, 111 c, 1110) ; et
- un recouvrement (2) qui recouvre au moins partiellement la première ouverture (111, 111a, 111 b, 111 c) du coussin gonflable (1) et qui comporte au moins une seconde ouverture (22, 22a, 22b, 220), dans lequel
- la première et la seconde ouverture (111, 111 a, 111 b, 111 c, 1110, 22, 22a, 22b, 220) sont réalisées et agencées de telle manière que la chambre du coussin gonflable (1) est accessible en traversant la première et la seconde ouverture (111, 111 a, 111b, 111 c, 1110, 22, 22a, 22b, 220), et
- la première ouverture (111, 111a, 111b, 111c, 1110) est réalisée dans une première couche (11) d'un matériau du coussin gonflable et la seconde ouverture (22, 22a, 22b, 220) est réalisée dans une seconde couche (2) d'un matériau du coussin gonflable,
**caractérisé par**
au moins un composant (5, 6) qui pénètre dans le coussin gonflable (1) à travers la première et la seconde ouverture (111, 111 a, 111 b, 111 c, 1110, 22, 22a, 22b, 220), la première et la seconde couche (11, 2) étant tendues l'une par rapport à l'autre par le composant (5, 6) qui pénètre dans le coussin gonflable (1), dans la région de la première et de la seconde ouverture, de telle façon qu'un tronçon de la bordure de la première ouverture et un tronçon de la bordure de la seconde ouverture s'appliquent étanchement contre le composant (5, 6).

2. Système d'airbag selon la revendication 1, **caractérisé en ce que** la première et la seconde ouverture (111, 111 a, 111b, 111 c, 1110, 22, 22a, 22b, 220) sont réalisées et agencées de telle façon que du gaz peut s'écouler hors de la chambre du coussin gonflable (1) en traversant la première et la seconde ouverture (111, 111 a, 111 b, 111 c, 1110, 22, 22a, 22b, 220).

3. Système d'airbag selon l'une des revendications précédentes, **caractérisé en ce que** le recouvrement (2) est formé en un matériau pour coussin gonflable.

4. Système d'airbag selon l'une des revendications précédentes, **caractérisé en ce que** la première et la seconde ouverture (111, 111a, 111b, 111 c, 1110, 22, 22a, 22b, 220) sont réalisées et agencées de telle manière que la chambre du coussin gonflable (1) est accessible depuis l'extérieur du coussin gonflable (1).

5. Système d'airbag selon l'une des revendications précédentes, **caractérisé en ce que** la première et la seconde ouverture (111, 111a, 111b, 111 c, 1110, 22, 22a, 22b, 220) sont réalisées et agencées de telle façon que la chambre du coussin gonflable (1) est accessible depuis une autre chambre du coussin gonflable (1).

6. Système d'airbag selon l'une des revendications précédentes, **caractérisé en ce que** la première et/ou la seconde ouverture (111, 111a, 111b, 111c, 1110, 22, 22a, 22b, 220) sont réalisées dans un matériau extensible, de sorte que la taille de la première et/ou de la seconde ouverture (111, 111a, 111b, 111c, 1110, 22, 22a, 22b, 220) dépend de la pression intérieure dans le coussin gonflable (1).

7. Système d'airbag selon l'une des revendications précédentes, **caractérisé en ce que** la première et la seconde ouverture (111, 111a, 111b, 111c, 1110, 22, 22a, 22b, 220) se chevauchent mutuellement au moins localement.

8. Système d'airbag selon l'une des revendications précédentes, **caractérisé en ce que** la première et la seconde ouverture (111, 111a, 111b, 111c, 1110, 22, 22a, 22b, 220) se croisent.

9. Système d'airbag selon l'une des revendications précédentes, **caractérisé en ce que** le coussin gonflable (1) comprend plusieurs couches, et **en ce qu'**au moins une première ouverture (111, 111 a, 111 b, 111c, 1110) est réalisée dans au moins deux des couches.

10. Système d'airbag selon l'une des revendications précédentes, **caractérisé en ce que** le recouvrement (2) comprend plusieurs couches (201, 202), et au moins une seconde ouverture (22a, 22b) est réalisée respectivement dans au moins deux des couches (201, 202).

11. Système d'airbag selon l'une des revendications précédentes, **caractérisé en ce que** la première ouverture (111, 111 a, 111 b, 111 c, 1110) est réalisée dans une pièce fabriquée séparément du coussin gonflable (1), qui est reliée au coussin gonflable (1).

12. Système d'airbag selon la revendication 11, **caractérisé en ce que** le composant est un générateur de gaz (5) dont au moins un tronçon pénètre dans le coussin gonflable (1).

13. Système d'airbag selon l'une des revendications précédentes, **caractérisé en ce qu'**une patte (1112, 2220) est adjacente à la première et/ou à la seconde ouverture (111, 111a, 111b, 111c, 1110, 22, 22a, 22b, 220), ladite patte étant si flexible que la première ou la seconde ouverture peut être au moins partiellement dégagée par flexion de la patte.

14. Procédé pour fabriquer un module d'airbag en utilisant un système d'airbag selon l'une des revendications précédentes, dans lequel le recouvrement (2) est agencé à l'intérieur contre un matériau du coussin gonflable qui délimite la chambre du coussin gonflable, **caractérisé par** les étapes consistant à :
- faire traverser une première extrémité (51) d'un générateur de gaz (5) à travers la première ouverture (111, 111 a, 111b, 111 c, 1110) ménagée dans le matériau du coussin gonflable et à travers la seconde ouverture (22, 22a, 22b, 220) ménagée dans le recouvrement, de telle façon que le générateur de gaz (5) occupe une première position, et
- dans la première position, la première extrémité (51) pénètre dans la chambre du coussin gonflable (1) et est plus éloignée de la première ouverture que de la seconde ouverture, et la seconde extrémité du générateur de gaz (5), opposée à la première extrémité (51), se trouve à l'extérieur du coussin gonflable (1) ; et
- faire tourner le générateur de gaz (5) jusque dans une seconde position dans laquelle la première extrémité (51) se trouve plus proche de la première ouverture que de la seconde ouverture.

15. Procédé selon la revendication 14, **caractérisé en ce que** la rotation du générateur de gaz se produit sur environ 180°.
